# FASCICULE DE BREVET EUROPEEN

(11) **EP 2 240 338 B1**
(45) Date de publication et mention de la délivrance du brevet: **26.03.2014**
(21) Numéro de dépôt: 09702538.1
(22) Date de dépôt: 19.01.2009
(51) Int. Cl.: B60H 1/00

(54) **VOLET UNIQUE PERMETTANT LA FERMETURE DES SORTIES D'AIR CENTRALES ET LATÉRALES DANS UN SYSTÈME DE CLIMATISATION DE L'HABITACLE D'UN VÉHICULE AUTOMOBILE.**
EINZELKLAPPE FÜR DEN VERSCHLUSS DES MITTEL- UND SEITENLUFTAUSTRITTS BEI EINEM INSASSENRAUMKLIMATISIERUNGSSYSTEM EINES KRAFTFAHRZEUGES
SINGLE SHUTTER FOR CLOSING THE CENTRAL AND LATERAL AIR OUTLETS IN A MOTOR VEHICLE CABIN AIR-CONDITIONING SYSTEM.

(30) Priorité: 18.01.2008 BR PI0802754
(43) Date de publication de la demande: 20.10.2010
(73) Titulaire: Valeo Sistemas Automotivos LTDA, 05693-00 Sao Paulo (BR)
(72) Inventeur: MATEUS, Micael, 13323-420 Salto (BR); GEREZ, José Antonio, 13230-411 Paulista (BR)
(74) Mandataire: Vieillevigne, Sébastien Nicolas Bernard
(86) Numéro de dépôt international: PCT/IB2009/050175
(87) Numéro de publication internationale: WO 2009/090621

(56) Documents cités:
- WO-A-2005/044605
- WO-A-2006/074125
- DE-A1-102005 021 675
- US-A- 5 399 120

## Description

La présente invention concerne un boîtier de distribution d'un flux d'air dans un système de climatisation de l'habitacle d'un véhicule automobile incluant un volet qui, lorsqu'il est en position fermée, présente une géométrie qui permet de fermer des sorties latérales et centrales, en plus d'orienter l'écoulement du flux d'air vers une seconde sortie, lequel volet, lorsqu'il est en position ouverte, régule la distribution du flux d'air vers les sorties latérales et centrales, tout ceci à l'aide d'un composant unique.

La présente invention peut s'appliquer aux différentes versions de ventilation (V), de chauffage-ventilation (HV), de chauffage-ventilation et/ou climatisation (HVAC), et de ventilation-climatisation (VAC), utilisées dans les automobiles, les camions et les véhicules automobiles en général, et dont seules les dimensions et la géométrie du volet et du boîtier de distribution du flux d'air dans un système de climatisation de l'habitacle d'un véhicule automobile varient.

À l'heure actuelle, les brevets EP 1 526 015 B1 et FR 2 854 844 A1 décrivent des solutions similaires.

La solution proposée par le brevet FR 2 854 844 A1 augmente la zone d'interception du flux d'air pour une position déterminée, elle ne permet néanmoins pas de réguler le flux d'air vers des sorties différentes, par exemple, centrales et latérales.

D'autre part, le brevet EP 1 526 015 B1 présente un volet qui permet d'effectuer une régulation vers une sortie centrale et des sorties latérales. Cependant, la géométrie plane des ailes du volet augmente la perte de charge du boîtier et rend difficile l'écoulement du flux d'air vers les sorties latérales. Cette difficulté est due au fait que le volet proposé dévie brutalement l'écoulement du flux d'air de sa trajectoire principale par le biais de la déviation du flux d'air par les ailes planes du volet. En outre, il n'est pas possible de garantir l'étanchéité de l'air vers les sorties latérales lorsque le volet est en position fermée et ouverte.

Il existe d'autres solutions permettant d'obtenir l'étanchéité au niveau des sorties latérales et de réguler la distribution du flux d'air vers les sorties latérales et centrale, cependant, pour ce faire, il est nécessaire d'inclure des composants supplémentaires comme des bords, des leviers et des bielles dans la cinématique.

La présente invention fournit une amélioration définie par rapport à la technique antérieure représentée par les brevets et par les autres solutions mentionnés précédemment.

L'objet de la présente invention est d'obtenir au moyen d'un volet unique, lorsqu'il est en position fermée, la fermeture étanche des sorties latérales et centrale et l'orientation de l'écoulement d'un flux d'air vers une seconde sortie, et lorsqu'il est en position ouverte, une régulation de la distribution du flux d'air vers les sorties latérales et vers la sortie centrale. En outre, l'objet est d'adoucir les trajectoires parcourues par l'écoulement du flux d'air en vue de réduire la perte de charge du flux d'air dans le boîtier de distribution d'un système de climatisation de l'habitacle d'un véhicule automobile.

L'objet de la présente invention est atteint au moyen d'un volet unique permettant la fermeture des sorties d'air centrale et latérale dans un système de climatisation de l'habitacle d'un véhicule automobile pourvu d'un boîtier de distribution pour le passage de l'écoulement d'un flux d'air, lequel volet présente une géométrie cylindrique.

En particulier, un système de climatisation de l'habitacle d'un véhicule automobile équipé d'un boîtier de distribution permettant l'écoulement d'un flux d'air et comportant au moins une sortie d'air centrale et deux sorties latérales et un volet de distribution unique ayant une géométrie cylindrique comprenant au moins une paroi et au moins un flasque coopérant entre eux permettant une commande d'ouverture et de la fermeture de la sortie d'air centrale et des sorties latérales. Le flasque du volet de distribution s'étend sur un secteur angulaire supérieur au secteur angulaire d'extension de la paroi du volet de distribution.

Avantageusement, le flasque du volet de distribution définit au moins un bord latéral, notamment deux bords latéraux permettant la fermeture des sorties de latérales.

De façon préférentielle, les sorties latérales sont reliées à des buses de ventilation latérale et/ou à au moins un conduit 'pieds', en particulier deux conduits 'pieds' avant.

Selon une autre variante, le volet de distribution comprend au moins un passage d'air. De préférence, le passage d'air est agencé entre les deux bords latéraux.

Dans cet agencement, le passage d'air commande, avantageusement, la sortie d'air centrale et/ou a u moins un conduit 'pieds', en particulier un conduit 'pieds' arrière.

Selon un mode particulier, le volet de distribution comprend deux passages disposés de part et d'autre d'un flasque central.

De plus, le boîtier de distribution comprend au moins une chambre latérale définissant une conduite d'air vers les sorties de ventilation latérale dans une première position, dite de ventilation et logeant le flasque dans une deuxième position, dite 'pieds'.

Enfin, le volet de- distribution est en outre pourvu d'une première bande d'obturation et d'une deuxième bande d'obturation agencées en périphérie du volet de distribution, de telle sorte que la première bande d'obturation est apte à assurer l'étanchéité du volet de distribution avec le boîtier de distribution lorsque le volet de distribution est dans une première position, dite de ventilation, et en ce que la deuxième bande d'obturation est apte à assurer l'étanchéité du volet apte à assurer avec le boîtier de distribution lorsque le volet de distribution est dans une deuxième position, dite 'pieds'.

Préférentiellement, la première bande d'obturation et la deuxième bande d'obturation sont en EPDM.

La géométrie cylindrique du volet de distribution permet de réduire la perte de charge de l'air, grâce au rayon interne de la géométrie cylindrique du volet de distribution qui adoucit la trajectoire du passage du flux d'air.

D'autres caractéristiques et avantages de l'invention apparaîtront à l'examen de la description détaillée ci-après, et des dessins annexés qui pourront servir à compléter la compréhension de la présente invention, mais aussi, le cas échéant, contribuer à sa définition sur lesquels:
La présente invention peut être expliquée plus en détail au moyen de deux exemples pratiques :
   - la figure 1 est une vue isométrique de face d'un boîtier de distribution de climatisation devant être utilisée dans une automobile incorporant des conduits de distribution latéraux et centraux,
   - la figure 2 est une vue isométrique de coté d'un boîtier de distribution de climatisation devant être utilisée dans une automobile représentant le déplacement de la sortie d'air latérale, selon un premier mode de réalisation,
   - la figure 3 est une vue isométrique en coupe de face d'un boîtier de distribution de climatisation devant être utilisée dans une automobile représentant les divisions des sorties latérales et centrales, selon le premier mode de réalisation,
   - la figure 4 est une vue isométrique en coupe de face d'un boîtier de distribution de climatisation devant être utilisée dans une automobile représentant les divisions des sorties latérales et centrales avec un volet de distribution, selon te premier mode de réalisation,
   - les figure s 5 a et 5b sont constitué s respectivement de deux vues isométriques de face et arrière du volet de distribution intégré à un boîtier de distribution de climatisation devant être utilisée dans une automobile représentant la géométrie cylindrique du volet de distribution et les bords latéraux qui permettent de réguler l'air vers les sorties respectives, selon le premier mode de réalisation,

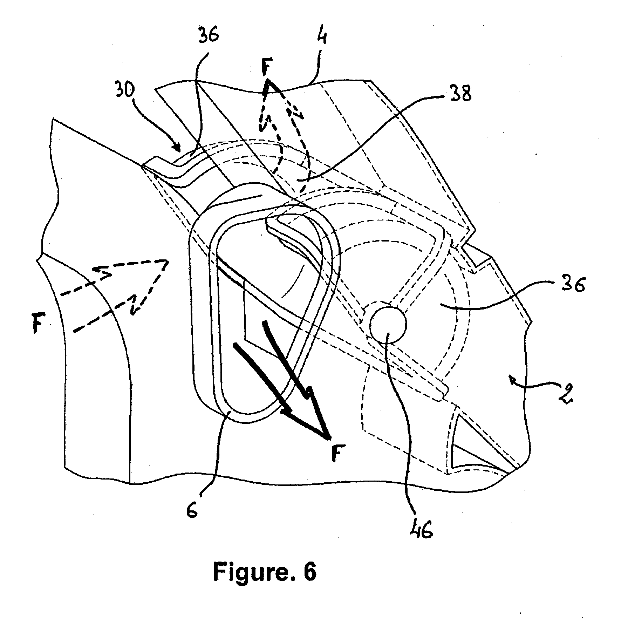

   - la figure 6 est une vue isométrique de détail d'un boîtier de distribution de climatisation devant être utilisée dans une automobile avec le volet de distribution, laquelle figure représente les divisions des sorties latérales et centrales lorsque le volet de distribution est en position ouverte, selon le premier mode de réalisation,

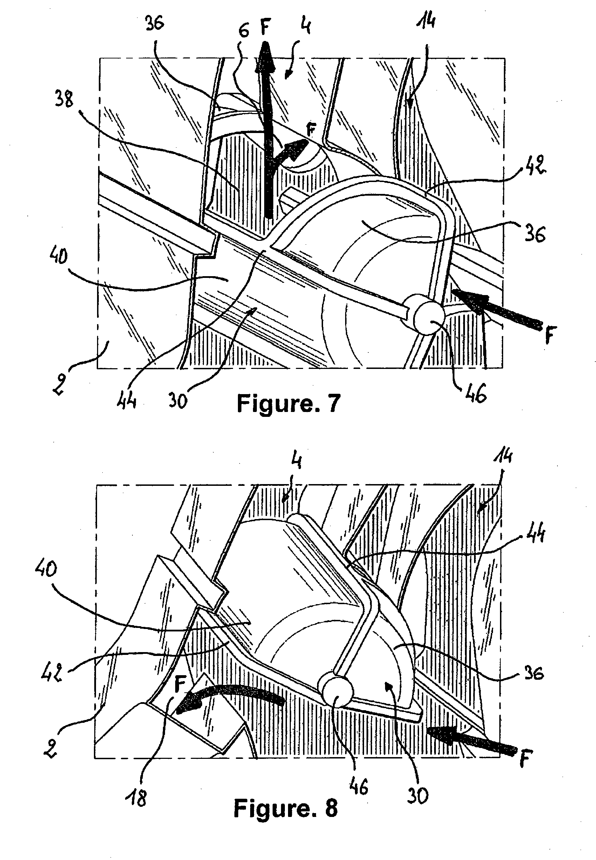

   - la figure 7 est une vue isométrique en coupe partielle d'un boîtier de distribution de climatisation devant être utilisée dans une automobile avec le volet de distribution, laquelle figure représente la bande d'obturation du volet de distribution selon le premier mode de réalisation,
   - la figure 8 est une vue isométrique en coupe partielle d'un boîtier de distribution de climatisation devant être utilisée dans une automobile avec le volet de distribution, laquelle figure représente l'écoulement de l'air lorsque le volet de distribution est en position fermée, selon le premier mode de réalisation,

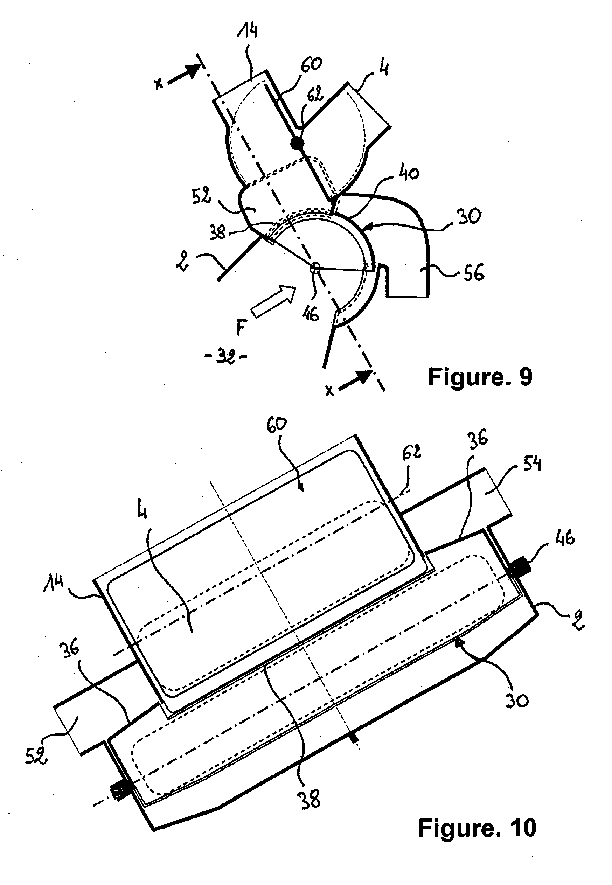

   - la figure 9 est une vue en coupe de coté d'un boîtier de distribution de climatisation, selon un deuxième mode de réalisation,
   - la figure 10 est une vue en coupe de dessus selon la ligne X-X de la figure 9, selon le deuxième mode de réalisation,

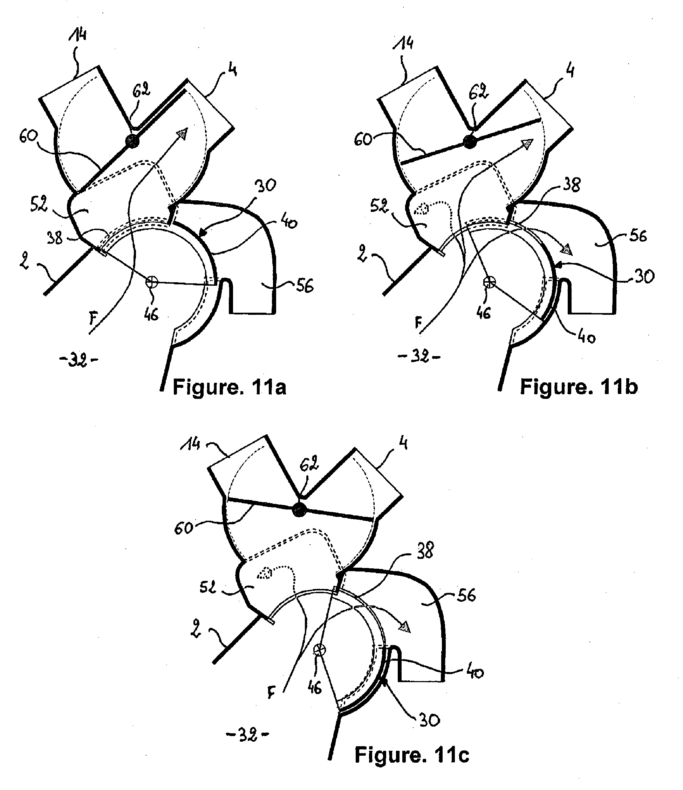

   - les figures 11a à 11e représentent diverses configurations de distribution selon le second mode de réalisation des figures 9 et 10, respectivement, en configuration 'aération', 'aération pieds', 'pieds', 'pieds dégivrage', et 'dégivrage', selon le deuxième mode de réalisation,

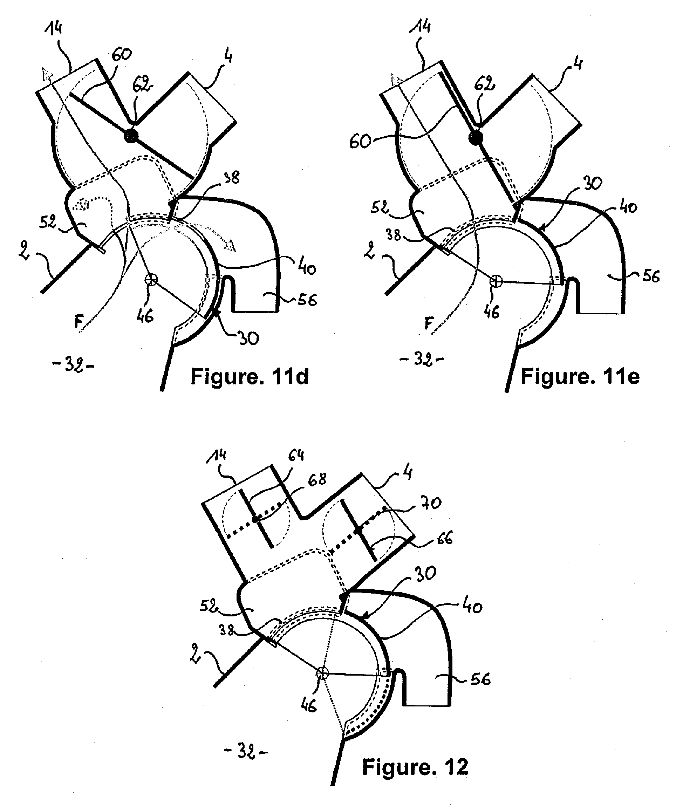

   - la figure 12 présente une variante du deuxième de mode de réalisation des figures 9, 10 et 11a à 11e, selon le deuxième mode de réalisation, et

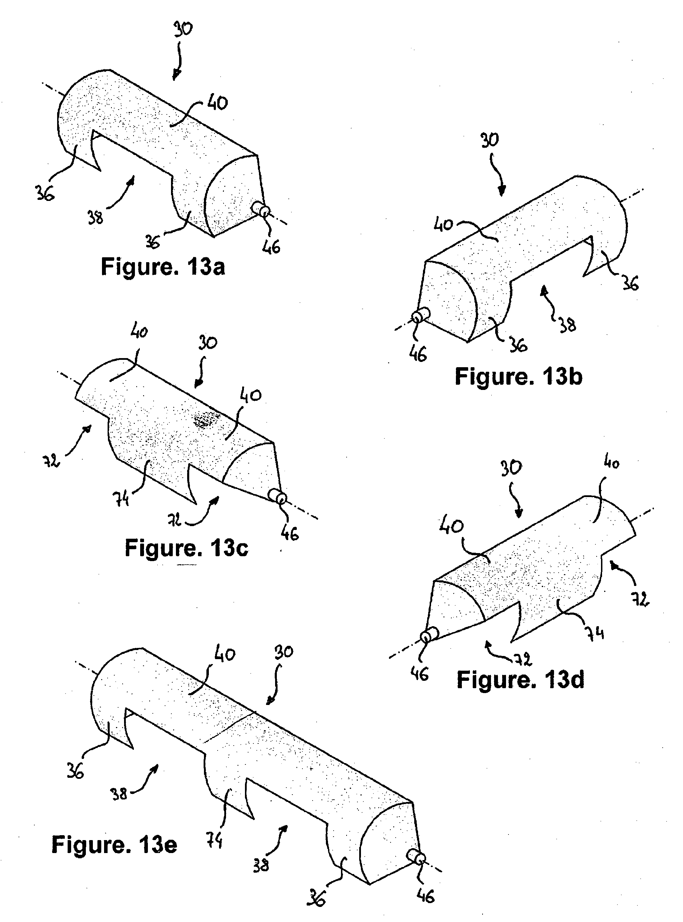

   - les figures 13a à 13e présentent diverses configurations du volet selon la présente invention.

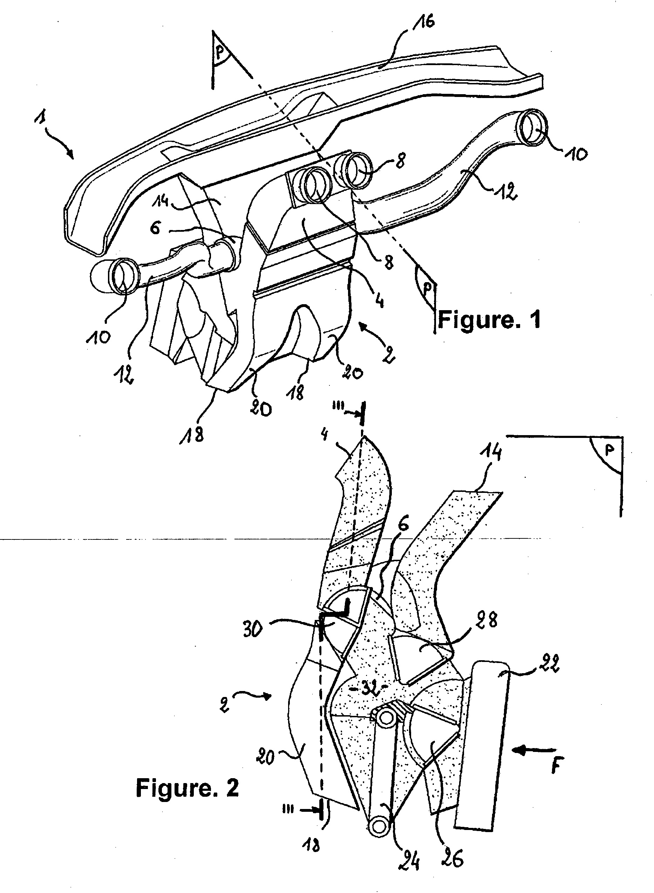

La figure 1 illustre, selon un premier mode de réalisation, un boîtier de distribution 2 d'un dispositif de climatisation 1. Le boîtier de distribution 2 comprend une sortie de ventilation centrale 4 d'air dirigé vers la ventilation centrale ainsi que des sorties de ventilation latérale 6. La sortie de ventilation centrale 4 est raccordée, selon le premier exemple de réalisation, à deux buses de sortie centrale 8 apte à diffuser un flux d'air F dans une zone centrale de l'habitacle du véhicule.

Les sorties de ventilation latérale 6 sont disposées respectivement sur le coté droit et gauche du boîtier de distribution 2. Les sorties de ventilation latérale 6 sont respectivement raccordées à une buse de ventilation latérale 10. Chaque buse de ventilation latérale 10 communique avec la sortie de ventilation latérale 6 respective par un conduit de ventilation latérale 12 apte à conduire le flux d'air F vers la buse de ventilation latérale 10 pour être diffusé dans une zone latérale de l'habitacle du véhicule.

De plus, le boîtier de distribution 2 comprend une sortie de dégivrage 14. La sortie de dégivrage 14 communique avec une buse de dégivrage 16.

En raison de la position des sorties de ventilation latérale 6, la section transversale de la sortie de dégivrage 14 est réduite, comme illustré à la figure 2. En effet, une portion des sorties de ventilation latérale 6 pénètre dans le boîtier de distribution 2 de part et d'autre de la sortie de dégivrage 14.

Enfin, le boîtier de distribution 2 comprend deux sorties 'pieds' 1 8 conduisant le flux d'air F jusqu'à la zone des pieds. Selon le premier mode de réalisation, les deux sorties 'pieds' 18 conduisent respectivement à la zone 'pied' avant droite et avant gauche de l'habitacle du véhicule. De façon préférentielle, les deux sorties 'pieds' 18 sont matérialisées par des conduits 'pieds' 20 respectifs.

La figure 2 illustre une vue de coté du boîtier de distribution 2 d'un dispositif de climatisation 1 selon le plan P de la figure 1.

La figure 2 montre la sortie de ventilation latérale 6 décalée par rapport à la sortie de ventilation centrale 4. La sortie de ventilation latérale 6 intercepte le flux d'air F de la sortie de ventilation centrale 4.

Le boîtier de distribution 2 loge également des échangeurs de chaleurs, en particulier un évaporateur 22 et un radiateur de chauffage 24 pour le traitement thermique du flux d'air F parcourant le boîtier de distribution 2 jusqu'aux diverses sorties.

Le boîtier de distribution 2 comporte également une chambre de mixage 32 pour la mise en température du flux d'air F après passage à travers l'évaporateur 22 et/ou le radiateur de chauffage 24 et préalablement à la distribution du flux d'air F traité thermiquement dans les différentes sorties du boîtier de distribution 2.

La mise en température du flux d'air F est assuré par un volet de mixage 26 permettant de calibrer la portion du flux d'air F traversant le radiateur de chauffage 24 avant de pénétrer dans la chambre de mixage 32 et la portion du flux d'air F pénétrant directement dans la chambre de mixage 32.

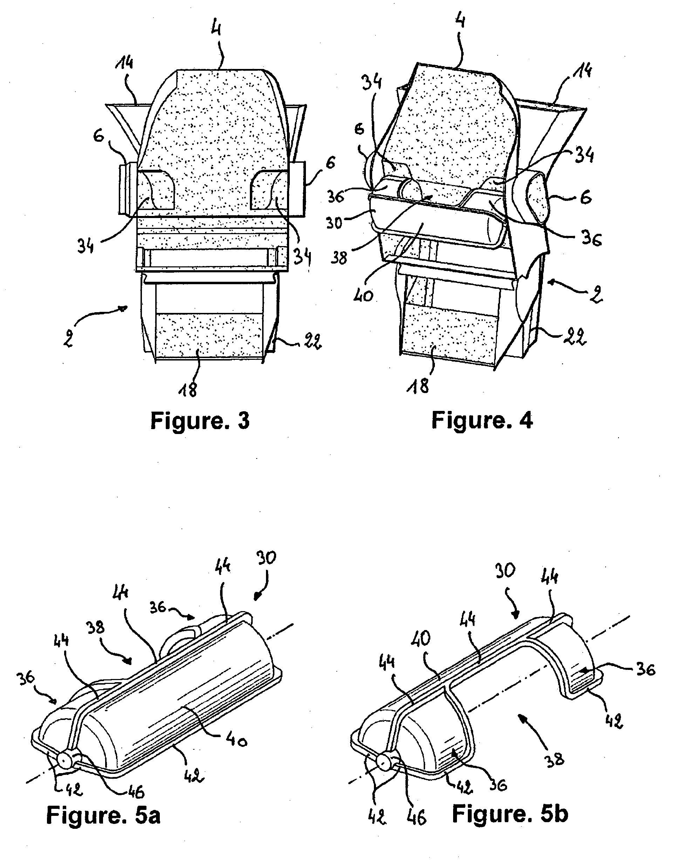

La distribution du flux d'air F traité thermiquement est assuré par des volets commandant l'ouverture et la fermeture des sorties prévues dans le boîtier de distribution 2. En particulier, un volet de dégivrage 28 ouvre et ferme la sortie de dégivrage 14. Un volet de distribution 30 est prévu, selon le premier exemple de réalisation, pour commander l'ouverture et la fermeture de la sortie de ventilation centrale 4 et des sorties de ventilation latérale 6. Le volet de distribution 30 sera décrit plus en détail en relation avec les figures 5a et 5b.

Afin de résoudre le problème de réduction de la section transversale de la sortie de dégivrage 14, la présente invention propose une nouvelle géométrie de boîtier de distribution 2 où la section transversale est uniquement réduite dans les parties latérales, à proximité des sorties latérales de ventilation 6, comme illustré aux figures 3 et 4.

La figure 3 représente le boîtier de distribution 2 en coupe, selon la ligne III-III de la figure 2, dans la zone de la sortie de ventilation centrale 4. La figure 3 montre deux chambres latérales 34 en communication avec les sorties de ventilation latérale 6. Les deux chambres latérales 34 permettent de faciliter le passage du flux d'air F vers les sorties de ventilation latérale 6.

Les deux chambres latérales 34 sont agencées de telle façon qu'elles réduisent, localement, la section transversale de la sortie de dégivrage 14 pour permettre le débattement du volet de distribution 30.

La figure 4 représente le boîtier de distribution 2 en coupe, selon la ligne III-III de la figure 2, dans la zone de la sortie de la ventilation centrale 4. La figure 4 est identique à la figure 3 et montre, en plus, le volet de distribution 8 monté dans le boîtier de distribution 2.

Le volet de distribution 8 comporte des flasques latéraux constituant deux bords latéraux 36. Les deux bords latéraux 36 contribuent à une forme cylindrique du volet de distribution 30.

Les deux bords latéraux 36 du volet de distribution 30 sont responsables de l'écoulement du flux d'air F vers les sorties latérales de ventilation 6 à travers les chambres latérales 34 du boîtier de distribution 2 lorsque le volet de distribution 30 est en position de ventilation, décrite ci-après.

Les deux bords latéraux 36 du volet de distribution 30 contribuent également à l'étanchéité du volet de distribution 30 par rapport au volet de distribution 30 dans les diverses positions prises par ce dernier.

Le volet de distribution 30 est agencé de telle sorte qu'il comporte un passage d'air 38 entre les deux bords latéraux 36. Le passage d'air 38 est responsable de l'écoulement central du flux d'air F vers la sortie de ventilation centrale 4 lorsque le volet de distribution 30 est en position de ventilation. En position de ventilation, le volet de distribution 30 assure l'obturation du flux d'air F vers la sortie 'pieds' 18, de façon étanche, telle que présenté conformément à la figure 8.

Lorsque le volet de distribution 30 est en position permettant un écoulement du flux d'air vers sortie 'pieds' 18, les deux bords latéraux 36 et le passage d'air 38 ferment conjointement, de façon étanche, avec le boîtier de distribution 2 l'écoulement du flux d'air vers les sorties de ventilation centrale 4 et latérales 6, tout en permettant l'écoulement du flux d'air F vers la sortie 'pieds' 18. Une telle configuration est présentée conformément à la figure 9.

Les deux bords latéraux 36 se logent dans les deux chambres latérales 34 du boîtier de distribution 2 lorsque le volet de distribution 30 est en position 'pieds'. En position de ventilation, les deux chambres latérales 34 du boîtier de distribution 2 complètent le passage d'air 38 du volet de distribution 30 et adoucissent la trajectoire de l'écoulement du flux d'air F.

Sur la figure 4, il est possible de voir les deux bords latéraux 36 du volet de distribution 30 en train de fermer les sorties de ventilation latérales 6. L'écoulement du flux d'air à l'intérieur du volet de distribution 8 est décrit sur les figures 7 et 8.

Les figures 5a et 5b représentent le volet de distribution 30 respectivement selon une vue isométrique de face et arrière. Le volet de distribution 30 présente une géométrie cylindrique qui favorise l'écoulement du flux d'air à l'intérieur de celui-ci et dans le boîtier de distribution 30. Par ailleurs, le volet de distribution 30 est pourvu d'un axe de rotation 46. De façon préférentielle, l'axe de rotation 46 constitue également l'axe de la géométrie cylindrique du volet de distribution 30.

Le volet de distribution 30 est équipé de deux bords latéraux 36 qui, en position de ventilation, orientent l'écoulement du flux d'air vers les sorties de ventilation latérale 6 et le passage d'air 38 disposé entre les deux bords latéraux 36 régule l'écoulement du flux d'air vers la sortie de ventilation centrale 4.

La forme du volet de distribution 8 est sensiblement cylindrique constituée d'une paroi 40 formant un quart de cylindre s'étendant sur une portion de la longueur du volet de distribution 30. Le volet de distribution 30 comporte également deux demi cylindres latéraux s'étendant sur une partie complémentaire de la longueur du volet de distribution 30 coopérant avec la paroi 40. Les deux demi cylindres latéraux forment les bords latéraux 36 permettant de fermer et d'ouvrir les sorties de ventilation latérales 6. Avantageusement, les bords latéraux 36 sont disposés de chaque coté de la paroi 40.

Les bords latéraux 36 s'étendent sur un secteur angulaire supérieur au secteur angulaire d'extension de la paroi 40 de sorte à créer le passage d'air 38 entre les deux bords latéraux 36.

De façon préférentielle, le volet de distribution 30 comporte une première bande d'obturation 42, par exemple en EPDM. La première bande d'obturation 42 est responsable de l'étanchéité du volet de distribution 30 avec le boîtier de distribution 2 lorsque le volet est en position de ventilation. A cet effet, la première bande d'obturation 42 est agencée en périphérie du volet de distribution 30. La première bande d'obturation 42 assure en coopération avec les bords latéraux 36 la fonction d'étanchéité en position de ventilation.

Le volet de distribution 30 comporte une deuxième bande d'obturation 44, par exemple en EPDM. La deuxième bande d'obturation 44 est responsable de l'étanchéité du volet de distribution 30 avec le boîtier de distribution 2 lorsque le volet est en position 'pieds'. A cet effet, la deuxième bande d'obturation 44 est agencée en périphérie du volet de distribution 30 au niveau du plan contenant la jonction entre la paroi 40 et les bords latéraux 36. La deuxième bande d'obturation 44 assure en coopération avec les bords latéraux 36 la fonction d'étanchéité en position 'pieds'.

La figure 6 représente le boîtier de distribution 2 devant être utilisée dans un véhicule automobile et montre le volet de distribution 30 en position ouverte ou de ventilation.

Il est possible de voir que les deux bords latéraux 36 régulent l'écoulement du flux d'air F vers les sorties de ventilation latérale 6. Le passage d'air 38 régule le flux d'air F vers la sortie de ventilation centrale 4. L'interaction du volet de distribution 30 avec le boîtier de distribution 2 est décrite conformément aux figures 2 à 4.

La figure 6 montre également la trajectoire de l'écoulement du flux d'air F à travers la géométrie cylindrique du volet de distribution 30. La géométrie cylindrique du volet de distribution 30 favorise la réduction de la perte de charge dans la zone d'implantation du volet de distribution 30 en raison de l'adoucissement de la trajectoire de l'écoulement du flux d'air vers les sorties de ventilation latérale 6.

La figure 7 représente le boîtier de distribution 2 avec le volet de distribution 30 en position de ventilation. Le flux d'air F provenant de la chambre de mixage 32 est dirigé vers le volet de distribution 30. Les deux bords latéraux 36 du volet de distribution 30 sont responsables de l'écoulement du flux d'air F vers les sorties de ventilation latérale 6. Le passage d'air 38 du volet de distribution 30 est responsable de l'écoulement du flux d'air F vers la sortie de ventilation centrale 4.

La première bande d'obturation 42 en EPDM est responsable de l'étanchéité du volet de distribution 30 avec le boîtier de distribution 2 lorsque le volet est en position de ventilation.

La deuxième bande d'obturation 44 en EPDM est responsable de l'étanchéité du volet de distribution 30 avec le boîtier de distribution 14 lorsque le volet est en position 'pieds'.

La figure 8 représente le boîtier de distribution 2 avec le volet de distribution 30 en position 'pieds'. La géométrie cylindrique du volet de distribution 30 permet de dévier sans à-coup l'écoulement du flux d'air F vers la sortie pieds 17. Cette géométrie douce de la trajectoire du flux d'air F est possible grâce au rayon des portions cylindriques du volet de distribution 30, ce qui permet de réduire la perte de charge du flux d'air dans cette trajectoire du flux d'air F vers la sortie 'pieds' 18.

Le passage de la position de ventilation telle que présentée en figure 7 à la position 'pieds' illustrée à la figure 8 se fait par rotation du volet de distribution 30 autour de l'axe de rotation 46.

Les figures 9 et 10 illustrent un deuxième mode de réalisation de la présente invention. Plus particulièrement, la figure 9 représente une coupe vue de coté d'un boîtier de distribution 2 d'air selon le deuxième mode de réalisation. La vue selon la figure 9 correspond à une coupe identique à la figure 2.

La figure 10 est une vue en coupe de dessus selon la ligne X-X de la figure 9.

Selon le deuxième mode de réalisation, le volet de distribution 30 commande l'ouverture et la fermeture de divers conduits d'air menant à des sorties disposées dans différents espaces de l'habitacle du véhicule.

En particulier, le volet de distribution 30 est monté en rotation autour d'un axe de rotation 46. L'axe de rotation 46 est disposé à l'interface entre une chambre de mixage 32 et des conduits 'pieds' avant 52 et 54 et 'pieds' arrière 56.

Le volet de distribution 30 est similaire à celui décrit précédemment en relation avec le premier exemple de réalisation, notamment aux figures 5a et 5b. Le volet de distribution 30 est donc formé d'une paroi 40 de forme générale cylindrique s'étendant, axialement, sur une portion de la longueur du volet de distribution 30 et forme, radialement, un quart de cylindre. La paroi 40 est couplée à des flasques latéraux.

Les flasques latéraux définissent des bords latéraux 36 ayant la forme de deux demi cylindres latéraux s'étendant sur une partie complémentaire de la longueur du volet de distribution 30 coopérant avec la paroi 40.

Les bords latéraux 36 s'étendent sur un secteur angulaire supérieur au secteur angulaire d'extension de la paroi 40 de sorte à créer un passage d'air 38 entre les deux bords latéraux 36.

Ainsi, selon le degré de rotation du volet de distribution 30 dans le boîtier de distribution 2, le volet de distribution 30 permet d'ouvrir et de fermer les conduits 'pieds' avant 52 et 54 et/ou 'pieds' arrière 56 et ainsi permettre la distribution d'un flux d'air F issu de la chambre de mixage 32 vers ces conduits.

Les différentes configurations de distribution seront exposées en relation avec les figures 11a à 11e après rotation du volet de distribution 30 autour de son axe de rotation 46.

Le volet de distribution 30 est mobile en rotation autour de l'axe de rotation 46 entre deux positions extrêmes telles que, respectivement, présentées en figures 9, 11a, 11e, pour la première position extrême, et en figure 11c, pour la deuxième position extrême.

Le volet de distribution 30 peut également prendre une pluralité de positions intermédiaires entre les deux positions extrêmes telles que présentées en figures 11b et 11d.

Selon le second mode de réalisation, les bords latéraux 36 du volet de distribution 30 commandent l'ouverture et la fermeture des conduits 'pieds' avant 52 et 54. La paroi 40 du volet de distribution 30 commande l'ouverture et la fermeture du conduit 'pieds' arrière 56.

Le volet de distribution 30, selon le deuxième mode de réalisation, peut comporter également des bandes d'obturation, notamment au nombre de deux telles que définies précédemment en relation avec la première variante de réalisation, assurant en coopération avec les bords latéraux 36 la fonction d'étanchéité dans les positions de ventilation, 'pieds' et toutes les positions intermédiaire du volet de distribution 30.

De plus, le boîtier de distribution 2 comprend , en aval du volet de distribution 30 dans le sens d'écoulement du flux d'air F, un volet de répartition 60 mobile en rotation autour d'un axe de rotation 62 dans le boîtier de distribution 2.

L'axe de rotation 62 du volet de distribution 60 est agencé à la jonction des sorties de ventilation centrale 4 et dégivrage 14. Ainsi disposé, le volet de distribution 60 peut prendre deux positions extrêmes telles que, dans la première position extrême, le volet de distribution 60 ferme la sortie de dégivrage 14 et ouvre la sortie de ventilation centrale 4, représentée en figure 11 a et, dans la deuxième position extrême, le volet de distribution 60 ferme la sortie de ventilation centrale 4 et ouvre la sortie de dégivrage 14, représentée en figure 9 et en figure 11e.

Le volet de distribution 60 peut également prendre une pluralité de positions intermédiaires entre les deux positions extrêmes.

En particulier, le volet de distribution 60 peut prendre une position médiane dans laquelle il ferme la sortie de ventilation centrale 4 et la sortie de dégivrage 14, tel qu'illustré à la figure 11c. Une telle configuration est, notamment, rendue possible par la mise en place de portées cylindrique s dans les parois du boîtier de distribution 2.

Les figures 11a à 11e représentent diverses configurations de distribution du flux d'air F traité par le système de climatisation 1 dans l'habitacle du véhicule selon le second mode de réalisation des figures 9 et 10.

La figure 11a correspond à une distribution dite 'aération' dans laquelle le volet de distribution 30 occupe sa première position extrême et le volet de répartition 60 occupe sa première position extrême.

Selon cet agencement, le volet de distribution 30 ferme le passage d'air menant au conduit 'pieds' arrière 56 par l'intermédiaire de la paroi 40. De même, les bords latéraux 36 du volet de distribution 30 ferment les passages menant aux conduits 'pieds' avant 52 et 54.

Enfin, le passage d'air 38 fait face aux sorties de ventilation centrale 4 et de dégivrage 14. Ainsi agencé, le flux d'air F issu de la chambre de mixage 32 est dirigé vers la sortie de ventilation centrale 4 et/ou la sortie de dégivrage 14.

Selon l'exemple de la figure 11a, le volet de sorties de ventilation centrale 4 ferme la sortie de dégivrage 14. Le flux d'air F issu de la chambre de mixage 32 est directement envoyé dans la sortie de ventilation centrale 4.

La figure 11b correspond à une distribution dite 'aération pieds' dans laquelle le volet de distribution 30 a effectué une rotation dans le sens horaire depuis sa première position extrême, illustrée à la figure 11a.

Selon cette disposition, le passage d'air 38 du volet de distribution 30 se trouve, au moins partiellement, face au conduit 'pieds' arrière 56. De même, les bords latéraux 36 ouvrent, au moins partiellement, les conduits 'pieds' avant 52 et 54.

Le volet de répartition 60 ferme la sortie de dégivrage 14. Le flux d'air F issu de la chambre de mixage est directement envoyé dans la sortie de ventilation centrale 4. Toutefois, grâce à l'agencement des portées cylindriques, le volet de répartition 60 peut pivoter progressivement afin de réduire progressivement la section de passage de la sortie de ventilation centrale 4.

Le flux d'air F issu de la chambre de mixage peut donc être distribué aux zones 'pieds' de l'habitacle par l'intermédiaire des conduits 'pieds' avant' 52 et 52 et du conduit 'pieds' arrière 56, et au zone avant d'aération l'habitacle par l'intermédiaire de la sortie de ventilation centrale 4 .

La figure 11c correspond à une distribution dite 'pieds' dans laquelle le volet de distribution 30 a effectué une rotation dans le sens horaire depuis la position prise à la figure 11b pour arriver dans sa deuxième position extrême.

Selon cette disposition, le passage d'air 38 du volet de distribution 30 libère totalement la section de passage du conduit 'pieds' arrière 56. De même, les bords latéraux 36 ouvrent, intégralement, les conduits 'pieds' avant 52 et 54.

Le volet de répartition 60 est amené en position médiane dans laquelle il ferme la sortie de dégivrage 14 et la sortie de ventilation centrale 4.

Le flux d'air F issu de la chambre de mixage 32 peut donc être distribué uniquement aux zones 'pieds' de l'habitacle par l'intermédiaire des conduits 'pieds' avant' 52 et 54 et du conduit 'pieds' arrière 56.

La figure 11d correspond à une distribution dite 'pieds dégivrage' dans laquelle le volet de distribution 30 a effectué une rotation dans le sens anti-horaire depuis sa deuxième position extrême telle que présentée en figure 11c.

En particulier, le volet de distribution 30 peut prendre de nouveau la position qui était la sienne à la figure 11b.

Selon cette disposition, le passage d'air 38 du volet de distribution 30 se trouve, au moins partiellement, face au conduit 'pieds' arrière 56. Les bords latéraux 36 ouvrent, au moins partiellement, les conduits 'pieds' avant 52 et 54.

Le volet de répartition 60 ouvre la sortie de dégivrage 14. Le flux d'air issu de la chambre de mixage 32 est directement envoyé dans la sortie de dégivrage 14. Toutefois, grâce à l'agencement des portées cylindriques, le volet de répartition 60 peut pivoter progressivement afin d'augmenter progressivement la section de passage de la sortie de dégivrage 14.

Le flux d'air F issu de la chambre de mixage 32 peut donc être distribué aux zones 'pieds' de l'habitacle par l'intermédiaire des conduits 'pieds' avant' 52 et 54 et du conduit 'pieds' arrière 56, et au zone avant de dégivrage par l'intermédiaire de la sortie de dégivrage 14.

Enfin, la figure 11e correspond à une distribution dite 'dégivrage' dans laquelle le volet de distribution 30 a effectué une rotation dans le sens anti-horaire afin de se trouver dans sa première position extrême depuis la position prise en figure 11d. Le volet de distribution 30 occupe donc la même position qu'en figure 11a.

Selon l'exemple de la figure 11e, le volet de répartition 60 ferme la sortie de ventilation centrale 4. Le flux d'air F issu de 4a chambre de mixage 32 est directement envoyé dans la sortie de dégivrage 14.

La figure 12 montre une variante de l'exemple de réalisation tel que décrit aux figures 11a à 11e. Le dispositif de la figure 12 est tel que les sorties ventilation centrale 4 et de dégivrage 14 sont commandés respectivement par un volet de dégivrage 64 en rotation autour d'un axe de rotation 68 propre dans le boîtier de distribution 2 et par un volet d'aération 66 en rotation autour d'un axe de rotation 70 propre dans le boîtier de distribution 2. Particulièrement, les valets de dégivrage 64 et d'aération 66, sont de type 'papillon' selon l'exemple décrit.

Cette configuration des volets de dégivrage 64 et d'aération 66 permet de désolidariser les commandes d'ouverture et de fermeture des sorties de ventilation centrale 4 et de dégivrage 14. Cela donne une plus grande souplesse dans la gestion des configurations de distribution du flux d'air F traité par le système de climatisation 1 dans l'habitacle du véhicule.

Selon les divers modes de réalisation décrits précédemment, le volet de distribution 30 est de forme sensiblement cylindrique avec un passage d'air 38 central délimité par deux bords latéraux 6. Toutefois, le passage d'air 38 du volet de distribution 30 est propre à un agencement interne donné du système de climatisation 1, notamment la position de la sortie de dégivrage 14. Ainsi, le nombre de passages d'air 38 et leur disposition est intimement lié à la structure et à la disposition des sorties commandés par le volet de distribution 30. Les figures 13a à 13e présentent diverses configurations du volet de distribution 30.

Notamment, la figure 13a illustre un volet de distribution 30 similaire à celui décrit relativement aux premier et deuxième modes de réalisation.

La figure 13b présente un volet de distribution 30 dont la configuration est une symétrie miroir du volet de distribution 30 de la figure 13a.

La figure 13c illustre un volet de distribution 30 comprenant une paroi 40, deux passages latéraux 72 et un flasque central 74. Le flasque central 74 est de profil sensiblement cylindrique. Les deux passages latéraux 72 sont agencés de part et d'autre du flasque central 74. Les deux passages latéraux 72 sont surmontés par deux parois 40.

Un tel agencement est particulièrement adapté aux systèmes de climatisation disposant de deux conduits d'aération agencés de part et d'autre d'un conduit central et pénétrant dans la chambre de mixage 32.

La figure 13d présente un volet de distribution 30 dont la configuration est une symétrie miroir du volet de distribution 30 de la figure 13c.

La figure 13e présente une dernière variante de réalisation combinant les différents avantages des volets de distribution 30 décrits précédemment. Le volet de distribution 30 de la figure 13e comprend un flasque central 74, de forme sensiblement cylindrique, et deux bords latéraux 36 agencés à distance du flasque central 74. Ainsi défini, le volet de distribution 30 de la figure 13e permet la création deux passages d'air 38 agencés de part et d'autre du flasque central 74.

Un tel volet de distribution 30 est notamment employé dans le cadre de systèmes de climatisation bizones dans lesquels une configuration aérothermique d'un premier espace de l'habitacle, notamment l'espace 'conducteur', est différente d'une configuration aérothermique d'un deuxième espace de l'habitacle, notamment l'espace 'passager avant'.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Système de climatisation (1) de l'habitacle d'un véhicule automobile équipé d'un boîtier de distribution (2) permettant l'écoulement d'un flux d'air F et comportant au moins une sortie d'air centrale (4) et deux sorties latérales (6 ; 52, 54) et un volet de distribution (30) unique ayant une géométrie cylindrique comprenant au moins une paroi (40) et au moins un flasque (36, 74) coopérant entre eux permettant une commande d'ouverture et de fermeture de la sortie d'air centrale (4) et des sorties latérales (6 ; 52, 54),
**caractérisé en ce que** le flasque (36 ; 74) du volet de distribution (30) est de forme cylindrique et s'étend sur un secteur angulaire supérieur au secteur angulaire d'extension de la paroi (40) du volet de distribution (30), de façon à former au moins un passage d'air (38, 72) surmonté par la paroi (40) et permettant d'orienter l'écoulement du flux d'air F vers au moins une sortie d'air (4, 6 ; 56) selon le positionnement du volet de distribution (30).

2. Système de climatisation (1) selon la revendication 1, **caractérisé en ce que** le flasque du volet de distribution (30) définit au moins un bord latéral (36).

3. Système de climatisation (1) selon la revendication 2, **caractérisé en ce que** le volet de distribution (30) comprend deux bords latéraux (36) permettant la fermeture des sorties de latérales (6 ; 52, 54).

4. Système de climatisation (1) selon la revendication 3, **caractérisé en ce que** les sorties latérales (6) sont reliées à des buses de ventilation latérale (10).

5. Système de climatisation (1) selon la revendication 3, **caractérisé en ce que** les sorties latérales (6 ; 52, 54) sont reliées à au moins un conduit 'pieds'(52,54,56), en particulier deux conduits 'pieds' avant (52, 54).

6. Système de climatisation (1) selon la revendication 5 en combinaison avec la revendication 3, **caractérisé en ce que** le passage d'air (38) est agencé entre les deux bords latéraux (36).

7. Système de climatisation (1) selon la revendication 6, **caractérisé en ce que** le passage d'air (38) commande la sortie d'air centrale (4).

8. Système de climatisation (1) selon la revendication 5, **caractérisé en ce que** le passage d'air (38, 72) commande au moins un conduit 'pieds' (52, 54, 56), en particulier un conduit 'pieds' arrière (56).

9. Système de climatisation (1) selon l'une des revendications précédentes, **caractérisé en ce que** le volet de distribution (30) comprend deux passages (38, 72) disposés de part et d'autre d'un flasque central (74).

10. Système de climatisation (1) selon l'une des revendications précédentes, **caractérisé en ce que** le boîtier de distribution (2) comprend au moins une chambre latérale (34) définissant une conduite d'air vers les sorties de ventilation latérale (6) dans une première position, dite de ventilation et logeant le flasque (38) dans une deuxième position, dite 'pieds'.

11. Système de climatisation (1) selon l'une des revendications précédentes, **caractérisé en ce que** le volet de distribution (30) est en outre pourvu d'une première bande d'obturation (42) et d'une deuxième bande d'obturation (44) agencées en périphérie du volet de distribution (30), de telle sorte que la première bande d'obturation (42) est apte à assurer l'étanchéité du volet de distribution (30) avec le boîtier de distribution (2) lorsque le volet de distribution (30) est dans une première position, dite de ventilation, et **en ce que** la deuxième bande d'obturation (44) est apte à assurer l'étanchéité du volet apte à assurer avec le boîtier de distribution (2) lorsque le volet de distribution (30) est une deuxième position, dite 'pieds'.

12. Système de climatisation (1) selon la revendication 11, **caractérisé en ce que** la première bande d'obturation (42) et la deuxième bande d'obturation (44) sont en EPDM.

## Patentansprüche

1. Klimatisierungssystem (1) des Insassenraums eines Kraftfahrzeugs, das mit einem Verteilergehäuse (2) ausgerüstet ist, das das Strömen eines Luftstroms F erlaubt und mindestens einen zentralen Luftaustritt (4) und zwei seitliche Austritte (6; 52, 54) sowie eine einzige Verteilungsklappe (30) aufweist, die eine zylindrische Geometrie hat, die mindestens eine Wand (40) und mindestens einen Flansch (36, 74) aufweist, der zwischen ihnen zusammenwirkt, indem er eine Öffnungs- und Schließsteuerung des zentralen Luftaustritts (4) und der seitlichen Austritte (6; 52, 54) erlaubt,
**dadurch gekennzeichnet, dass** der Flansch (36; 74) der Verteilungsklappe (30) zylindrische Form hat und sich auf einem Winkelsektor erstreckt, der größer ist als der Ausdehnungswinkelsektor der Wand (40) der Verteilungsklappe (30), so dass mindestens eine Luftpassage (38, 72) gebildet ist, über der die Wand (40) liegt und die es erlaubt, das Strömen des Luftstroms F zu mindestens einem Luftaustritt (4, 6; 56) gemäß der Positionierung der Verteilungsklappe (30) auszurichten.

2. Klimatisierungssystem (1) nach Anspruch 1, **dadurch gekennzeichnet, dass** der Flansch der Verteilungsklappe (30) mindestens einen seitlichen Rand (36) definiert.

3. Klimatisierungssystem (1) nach Anspruch 2, **dadurch gekennzeichnet, dass** die Verteilungsklappe (30) zwei seitliche Ränder (36) aufweist, die das Schließen der seitlichen Austritte (6; 52, 54) erlauben.

4. Klimatisierungssystem (1) nach Anspruch 3, **dadurch gekennzeichnet, dass** die seitlichen Austritte (6) mit seitlichen Belüftungsdüsen (10) verbunden sind.

5. Klimatisierungssystem (1) nach Anspruch 3, **dadurch gekennzeichnet, dass** die seitlichen Austritte (6; 52, 54) mit mindestens einer Leitung "Füße" (52, 54, 56) verbunden sind, insbesondere zwei vorderen Leitungen "Füße" (52, 54).

6. Klimatisierungssystem (1) nach Anspruch 5, kombiniert mit Anspruch 3, **dadurch gekennzeichnet, dass** die Luftpassage (38) zwischen den zwei seitlichen Rändern (36) eingerichtet ist.

7. Klimatisierungssystem (1) nach Anspruch 6, **dadurch gekennzeichnet, dass** die Luftpassage (38) den zentralen Luftaustritt (4) steuert.

8. Klimatisierungssystem (1) nach Anspruch 5, **dadurch gekennzeichnet, dass** die Luftpassage (38, 72) mindestens eine Leitung "Füße" (52, 54, 56) steuert, insbesondere eine hintere Leitung "Füße" (56).

9. Klimatisierungssystem (1) nach einem der vorhergehenden Ansprüche, **dadurch gekennzeichnet, dass** die Verteilungsklappe (30) zwei Passagen (38, 72) aufweist, die zu beiden Seiten eines zentralen Flanschs (74) angeordnet sind.

10. Klimatisierungssystem (1) nach einem der vorhergehenden Ansprüche, **dadurch gekennzeichnet, dass** das Verteilungsgehäuse (2) mindestens eine seitliche Kammer (34) aufweist, die eine Luftleitung zu den seitlichen Belüftungsaustritten (6) in einer ersten Position, Belüftung genannt, aufweist, und den Flansche (38) in einer zweiten Position, "Füße" genannt, aufnimmt.

11. Klimatisierungssystem (1) nach einem der vorhergehenden Ansprüche, **dadurch gekennzeichnet, dass** die Verteilungsklappe (30) außerdem mit einem ersten Verschlussband (42) und einem zweiten Verschlussband (44) versehen ist, die am Umfang der Verteilungsklappe (30) derart eingerichtet sind, dass das erste Verschlussband (42) geeignet ist, die Abdichtung der Verteilungsklappe (30) mit dem Verteilungsgehäuse (2) sicherzustellen, wenn die Verteilungsklappe (30) in einer ersten Position, Belüftungsposition genannt, ist, und dass das zweite Verschlussband (44) geeignet ist, die Abdichtung der Klappe mit dem Verteilungsgehäuse (2) sicherzustellen, wenn die Verteilungsklappe (30) in einer zweiten Position, "Füße" genannt, ist.

12. Klimatisierungssystem (1) nach Anspruch 11, **dadurch gekennzeichnet, dass** das erste Verschlussband (42) und das zweite Verschlussband (44) aus EPDM sind.

## Claims

1. Air-conditioning system (1) for a motor vehicle interior, equipped with a distribution housing (2) allowing an airflow F to flow and comprising at least one central air outlet (4) and two lateral outlets (6; 52, 54) and a single distribution flap (30) of cylindrical geometry comprising at least one wall (40) and at least one shroud (36, 74) that collaborate with one another to allow controlled opening and closing of the central air outlet (4) and of the lateral outlets (6; 52, 54),
**characterized in that** the shroud (36; 74) of the distribution flap (30) is of cylindrical shape and extends over an angular sector that is greater than the angular sector over which the wall (40) of the distribution flap (30) extends so as to form at least one air passage (38, 72) surmounted by the wall (40) and allowing the airflow F to be directed towards at least one air outlet (4, 6; 56) according to the position of the distribution flap (30).

2. Air-conditioning system (1) according to Claim 1, **characterized in that** the shroud of the distribution flap (30) defines at least one lateral edge (36).

3. Air-conditioning system (1) according to Claim 2, **characterized in that** the distribution flap (30) comprises two lateral edges (36) allowing the lateral outlets (6; 52, 54) to be closed off.

4. Air-conditioning system (1) according to Claim 3, **characterized in that** the lateral outlets (6) are connected to lateral ventilation nozzles (10).

5. Air-conditioning system (1) according to Claim 3, **characterized in that** the lateral outlets (6; 52, 54) are connected to at least one "feet" canal (52, 54, 56), particularly to two front "feet" canals (52, 54).

6. Air-conditioning system (1) according to Claim 5 in combination with Claim 3, **characterized in that** the air passage (38) is arranged between the two lateral edges (36).

7. Air-conditioning system (1) according to Claim 6, **characterized in that** the air passage (38) controls the central air outlet (4).

8. Air-conditioning system (1) according to Claim 5, **characterized in that** the air passage (38, 72) controls at least one "feet" canal (52, 54, 56), particularly a rear "feet" canal (56).

9. Air-conditioning system (1) according to one of the preceding claims, **characterized in that** the distribution flap (30) comprises two passages (38, 72) positioned one on either side of a central shroud (74).

10. Air-conditioning system (1) according to one of the preceding claims, **characterized in that** the distribution housing (2) comprises at least one lateral chamber (34) defining an air duct leading to the lateral ventilation outlets (6) in a first position, referred to as the ventilation position, and housing the shroud (38) in a second position, referred to as the "feet" position.

11. Air-conditioning system (1) according to one of the preceding claims, **characterized in that** the distribution flap (30) is further provided with a first shut-off strip (42) and with a second shut-off strip (44) which are arranged at the periphery of the distribution flap (30), so that the first shut-off strip (42) is able to seal the distribution flap (30) in the distribution housing (2) when the distribution flap (30) is in a first position referred to as a ventilation position, and **in that** the second shut-off strip (44) is able to seal the flap inside the distribution housing (2) when the distribution flap (30) is in a second position referred to as the "feet" position.

12. Air-conditioning system (1) according to Claim 11, **characterized in that** the first shut-off strip (42) and the second shut-off strip (44) are made of EPDM.
